# EUROPEAN PATENT SPECIFICATION

(11) **EP 3 712 687 B1**
(45) Date of publication and mention of the grant of the patent: **02.02.2022**
(21) Application number: 17936812.1
(22) Date of filing: 26.12.2017
(51) Int. Cl.: G02B 5/18, G02B 27/09, G02B 27/42

(54) **OPTICAL PATTERN GENERATION DEVICE**
VORRICHTUNG ZUR ERZEUGUNG OPTISCHER MUSTER
DISPOSITIF DE GÉNÉRATION DE MOTIF OPTIQUE

(43) Date of publication of application: 23.09.2020
(73) Proprietor: Mitsubishi Electric Corporation, Tokyo 100-8310 (JP)
(72) Inventor: TAKADA, Yukari, Tokyo 100-8310 (JP); HIROSAWA, Kenichi, Tokyo 100-8310 (JP); YANAGISAWA, Takayuki, Tokyo 100-8310 (JP)
(74) Representative: Pfenning, Meinig & Partner mbB
(86) International application number: PCT/JP2017/046607
(87) International publication number: WO 2019/130418

(56) References cited:
- JP-A- 2001 174 615
- JP-A- 2003 019 576
- JP-A- 2003 019 576
- JP-A- 2004 133 456
- JP-A- 2013 033 204
- JP-A- 2017 168 729
- US-A1- 2005 233 550

## Description

### Technical Field

The present disclosure relates to a light pattern generator in which a diffractive optical element is used.

### Background Art

Diffractive optical elements, which form intended light patterns from incident light, are applied to various optical devices and the like. Their typical applications include material processing, printing, optical measurement, and lighting. For example, in a laser processing machine, a diffractive optical element functions to split an incident beam into a plurality of beams. Also, by designing positions to which split beams are cast and by designing the light intensities at the positions, a diffractive optical element is applied to a lighting device to produce a desired light pattern.

A diffractive optical element (DOE) is an element which is a substrate having periodically arranged slits and/or uneven shapes. The diffractive optical element uses diffractive light generated by the effects of the slits and/or the uneven shapes, to convert incident light into light having an intended intensity distribution. The phase-type diffractive optical element makes the phase distribution of incident light to be a phase distribution which forms an intended light pattern on the image screen; therefore, in comparison to the amplitude-type diffractive optical element, the phase-type diffractive optical element has an extremely high optical energy efficiency after conversion with respect to the incident light. Therefore, the phase-type diffractive optical element is used, not only as a diffractive optical element generating a diffraction pattern of a simple shape such as a uniform intensity distribution, but also as an element generating a diffraction pattern of a complicated shape.

Patent Document 1 discloses a conventional light pattern generator which includes one diffractive optical element to produce a single pattern, and another conventional light pattern generator which includes two diffractive optical elements, through which the light from the light source is transmitted to produce a pattern due to light having a diffraction angle larger than that of light transmitted through a single diffractive optical element.

Conventional methods for switching light patterns include a method as disclosed in Patent Document 2, in which the following steps are performed: light from the light source enters a liquid crystal; by varying the applied voltage, the phase pattern of the liquid crystal is varied to vary the phase distribution of the light transmitted through the liquid crystal, thereby switching the light patterns.

In a case where the light patterns are switched by using a lighting device in which a liquid crystal is utilized in place of the diffractive optical element, a voltage source for varying the voltage applied to the liquid crystal is required, which increases the size of the lighting device. The liquid crystal is an expensive component, increasing the cost of the light pattern generator. In contrast to the above, a light pattern generator using a diffractive optical element has an advantage that the light pattern generator can be downsized and the cost thereof can be reduced.

JP 2003 019576 A describes a laser marking device by which a workpiece is irradiated with a laser beam for pattern marking. The device is equipped with a laser generator for outputting a laser beam, a diffraction device by which the power density distribution of the laser beam outputted from the laser generator is converted to that of multiple peaks, and an image forming optical instrument which guides, to the workpiece, the laser beam relating to the power density distribution with multiple peaks for image formation.

US 2005/233550 A1 describes a laser marking apparatus comprising a laser light source to emit a laser bean and an optical element to form an interference fringe using the laser beam on a subject to be marked.

### Prior Art Documents

### Patent Documents

Patent Document 1: Unexamined Patent Application Publication JP, 2014-209237, A
Patent Document 2: Unexamined Patent Application Publication JP, 2013-505472, A

### Summary of the Invention

### Problems to be Solved by the Invention

In a conventional light pattern generator in which a diffractive optical element is used, an uneven surface shape of the diffractive optical element is designed so as to produce a desired pattern on an image screen at a specific wavelength. In this case, different patterns are necessary, which requires diffractive optical elements whose surfaces have different uneven shapes for individual wavelengths of the light source. Therefore, for producing each of the different light patterns, a single diffractive optical element is required. This results in a problem that, as the number of light patterns to be produced increases, the number of diffractive optical elements increases.

The present disclosure is made to solve the problem, and is aimed to realize a light pattern generator which can produce a plurality of patterns, using a single diffractive optical element.

### Solution to Problems

This problem is solved by a light pattern generator according to any of claims 1 to 3. Further improvements of the light pattern generator according to the invention are provided in the dependent claims.

A light pattern generator according to the present disclosure includes: a laser light source to output laser light; a condenser lens to refract the laser light outputted from the laser light source; a mask to absorb or reflect part of the refracted light outputted from the condenser lens, the mask transmitting the rest of the refracted light; and a diffractive optical element to change a phase of the transmitted light in accordance with a position on a plane perpendicular to a direction in which the light transmitted through the mask travels and to output light having a phase distribution to form a light pattern, wherein the condenser lens shifts its position between a first position which is the condenser lens's focal length distant from the laser light source and a second position that is farther than the condenser lens's focal length from the laser light source; and wherein when the condenser lens is positioned at the first position, the light output by the laser light source and transmitted through the condenser lens, the mask and the diffractive optical element is collimated and when the condenser lens is positioned at the second position, the light output by the laser light source and transmitted through the condenser lens, the mask and the diffractive optical element is converging.

### Advantages of the Invention

According to the present disclosure, a plurality of light patterns can be produced using a single diffractive optical element.

### Brief Description of the Drawings

Fig. 1 shows a configuration example of a light pattern generator 100 according to Embodiment 1.
Fig. 2 shows a structure example of a mask 3 according to Embodiment 1.
Fig. 3 shows an uneven surface shape of a diffractive optical element 4a according to Embodiment 1.
Figs. 4 show light patterns on an A-A' cross section and on an image screen 6 according to Embodiment 1.
Fig. 5 shows an FFP of light having been transmitted through the diffractive optical element 4a according to Embodiment 1.
Fig. 6 shows another configuration example of the light pattern generator 100 according to Embodiment 1.
Fig. 7 is an explanatory drawing of a condensation position of a condenser lens according to Embodiment 1.
Fig. 8 shows a configuration example of a light pattern generator 200 according to Embodiment 2.
Fig. 9 shows a structure example of a diffractive optical element 4b according to Embodiment 2.
Fig. 10 shows another configuration example of the light pattern generator 200 according to Embodiment 2.

### Embodiments

### Embodiment 1

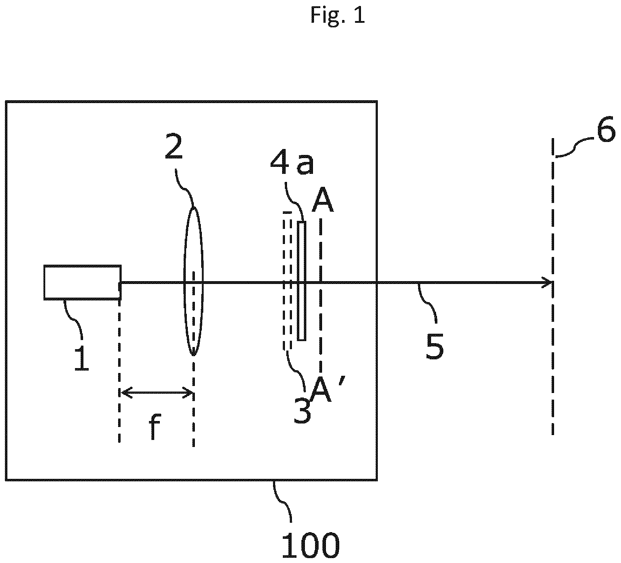

Fig. 1 shows a configuration example of a light pattern generator 100 according to Embodiment 1. The light pattern generator 100 includes a laser light source 1, a single condenser lens 2, a single mask 3, and a diffractive optical element 4a.

The laser light source 1 is a light source to output laser light with a single wavelength. For the laser light source 1, for example, a semiconductor laser, a fiber laser, or a solid state laser is used.

The condenser lens 2 is an optical element which is made of glass or resin; both or one of the condenser lens's surfaces has a spherical or non-spherical shape so that the incident light is refracted to diverge or converge.

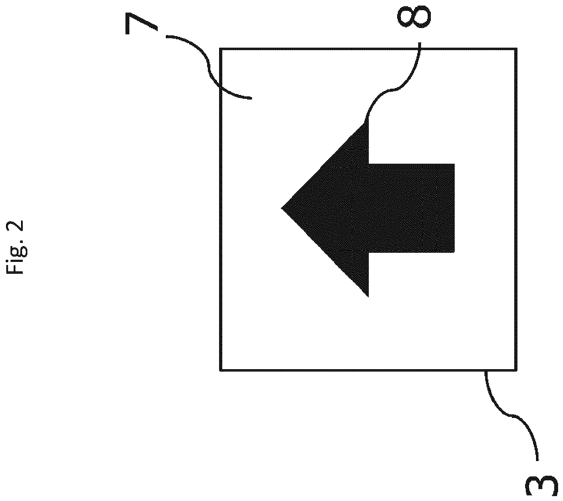

The mask 3 is an element to transmit a part of the incident light and to absorb or reflect the rest thereof, and has a configuration, for example, shown in Fig. 2. A transparent portion 7 of the mask 3 may be made of material to transmit the incident light such as glass and resin; or the transparent portion may be a space. An absorbing/reflecting portion 8 of the mask 3 may be a portion made of material to absorb or reflect the incident light, or may be an optical element on which a coating to absorb or reflect the incident light is provided.

The diffractive optical element 4a is an element which is a substrate made of glass or resin and has periodic slits and/or uneven shapes. The diffractive optical element uses diffractive light generated by the effects of the slits and/or the uneven shapes, to convert light entering the diffractive optical element 4a into light having an intended intensity distribution at the image screen. The Fourier transform image of the phase distribution produced by the diffractive optical element 4a is the light pattern to be produced after propagation. For example, in a case where the phase distribution is expressed as a rectangle function, the light pattern after propagation is expressed as a sinc function, which is a Fourier transform image of the rectangle function. That is, the diffractive optical element 4a changes the phase of the light in accordance with positions on a plane perpendicular to the light's traveling direction and outputs light having a phase distribution to form a light pattern. The phase distribution of light at the exit face of the diffractive optical element 4a depends on the structure of the slits and/or the uneven shapes. Therefore, the diffractive optical element 4a having a single uneven shape structure produces only a single light pattern. Thus, in a case where a plurality of light patterns is to be produced, it is necessary that the diffractive optical elements 4a are as many as the light patterns.

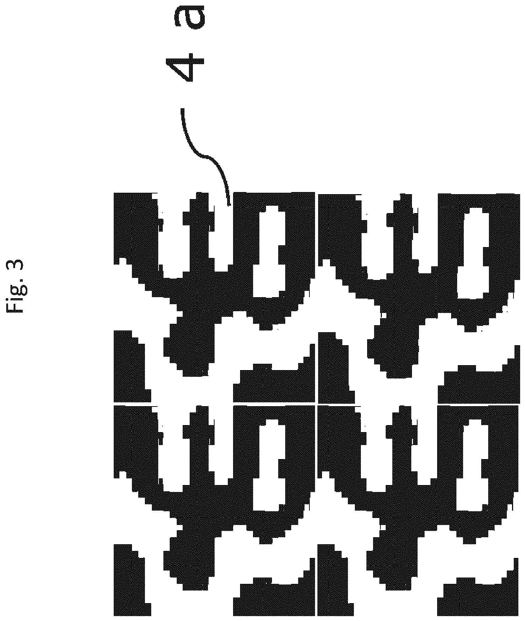

For designing the surface shape of the diffractive optical element 4a, an iterative Fourier transform method is usually used. The iterative Fourier transform method is a calculation algorithm using the periodicity in the discrete Fourier transform, and performs its calculation on the assumption that the distribution has a periodicity; therefore, the uneven surface shape of the actual diffractive optical element 4a is an array of phase distribution units each of which is the phase distribution obtained by the iterative Fourier transform method and which are periodically arranged. For example, the uneven surface shape of the diffractive optical element 4a shown in Fig. 3 is a two-column by two-row array of distribution units each of which is the phase distribution obtained by the iterative Fourier transform method. In a case where the incident light is transmitted through a single phase distribution unit, the light pattern to be produced is a convolution integral of the phase distribution at the exit face of the diffractive optical element and the rectangle function. Thus, the light pattern to be produced becomes a distribution blurrier than an intensity distribution used in the design work. Therefore, the currently used diffractive optical element is one on which a plurality of phase distribution units is arranged. The larger the multiplicity of phase distribution units is, the higher the degree of the mutual strengthening due to interference will be, whereby a light pattern with a higher contrast is produced. The number of the multiplicity is not limited to two as illustrated in Fig. 3, and it suffices that the number of the multiplicity is two or more; if the incident light is transmitted through more phase distribution units, the accuracy of the light pattern to be produced is improved. That is to say, the diffractive optical element 4a has an uneven surface for changing the phase distribution of the incident light; and the shape of the unevenness is a periodic array along in a direction, to improve the accuracy of light pattern to be produced.

An optical axis 5 is an axis of symmetry along which the light outputted from the laser light source 1 passes through the center of the optical system.

An image screen 6 is a screen for reflecting or scattering the incident light so that a light pattern will be displayed thereon. The image screen 6 has an intersection with the optical axis 5, and is positioned in a region which is a distance of D²/λ (D: size of the slit or the pitch of the diffractive optical element 4a, λ: wavelength of incident light) distant or farther in the direction of the optical axis 5 from the diffractive optical element 4a. This region is generally called the Fraunhofer region, and a diffraction pattern formed in the region is called a Fraunhofer diffraction pattern or Far Field Pattern (FFP).

An A-A' cross section is a section crossing the optical axis 5, whose position is near the exit face of the diffractive optical element 4a. Alight pattern formed at this position is generally called a Near Field Pattern (NFP).

Next, the operation of the light pattern generator 100 according to Embodiment 1 will be described.

In Fig. 1, the condenser lens 2 is placed at a position at which the distance between the light source 1 and the condenser lens 2 is equal to the focal length of the condenser lens 2.

The light outputted from the laser light source 1 enters the condenser lens 2. The condenser lens 2 is placed at the position at which the distance between the light source 1 and the condenser lens 2 is equal to the focal length of the condenser lens 2; therefore, the incident light entering the condenser lens 2 is refracted and collimated by the condenser lens 2. Here, collimating means that rays of light are made parallel.

The light projected from the condenser lens 2 enters the mask 3. Part of the light entering the mask 3, which enters the transparent portion 7 of the mask 3, is transmitted through the mask 3 to be projected therefrom. The incident light entering a light-shielding part 8 of the mask 3 is absorbed or reflected by the light-shielding part 8 and, thus, is not transmitted through the mask 3. Note that, in the configuration example shown in Fig. 1, the mask 3 is disposed in front of the diffractive optical element 4a. However, the configuration is not limited to the above and the mask 3 may be disposed behind the diffractive optical element 4a. Also, the shape of the light-shielding part 8 of the mask 3 is not limited to the shape shown in Fig. 2, but it is necessary for the area of the shape to be smaller than that of the diffractive optical element 4a; it is necessary for the transparent portion of the mask 3 to have a size large enough for the light transmitted through the mask 3 to be transmitted through two or more light patterns of the periodical light patterns on the diffractive optical element 4a.

The light projected from the mask 3 enters the diffractive optical element 4a. The incident light entering the diffractive optical element 4a is phase-modulated by the diffractive optical element 4a. The phase-modulated light propagates to form an NFP near the exit face of the diffractive optical element 4a and further propagates to form an FFP in the Fraunhofer region.

In a case where the mask 3 is disposed behind the diffractive optical element 4a, the light outputted from the condenser lens 2 enters the diffractive optical element 4a, and is phase-converted by the diffractive optical element to be projected therefrom. The light projected from the diffractive optical element 4a enters the mask 3; light entering the light-shielding part 8 is reflected or absorbed, and light entering the transparent portion 7 is transmitted through the mask 3. The light transmitted through the mask 3 propagates to form an NFP near the exit face of the mask 3 and then, further propagates to form an FFP in the Fraunhofer region.

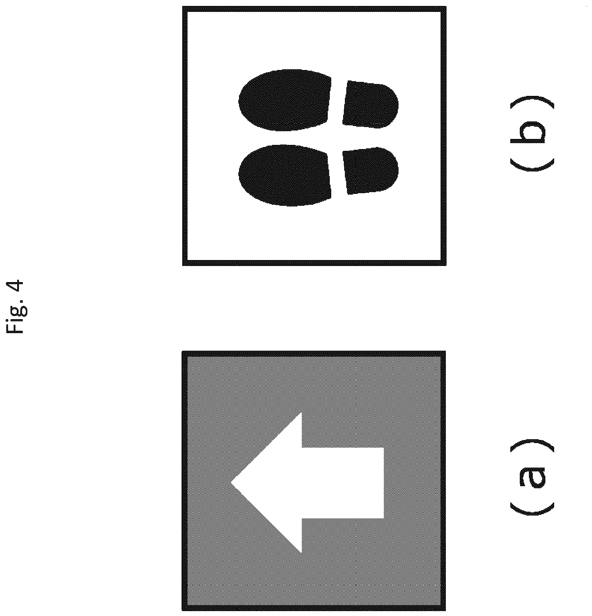

In a case of the configuration described above, the light pattern on the A-A' cross section is an NFP of the light transmitted through the diffractive optical element 4a. For example, in a case where the shapes of the transparent portion 7 and the light-shielding part 8 of the mask 3 are the shapes shown in Fig. 2, the light pattern on the A-A' cross section is a light pattern shown in Fig. 4(a).

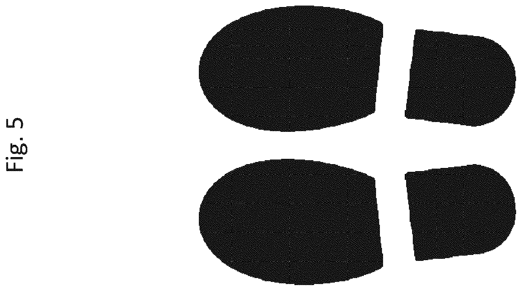

In a case of the configuration described above, the light pattern on the image screen 6 is an FFP of the light transmitted through the diffractive optical element 4a. For example, the FFP of the light transmitted through the diffractive optical element 4a which is designed to have an uneven shape causing the intensity distribution shown in Fig. 5 is a light pattern shown in Fig. 4(b); therefore, the light pattern on the image screen 6 is produced as a light pattern shown in Fig. 4(b), which is produced by the light diffracted by the diffractive optical element.

Note that the uneven shape of the diffractive optical element 4a periodically repeats a pattern for the light pattern phase distribution as shown in Fig. 3; therefore, even in a case where the light is reflected or absorbed in part by the mask 3, the light pattern can be produced on the image screen 6 by the light diffracted by the diffractive optical element 4a.

That is to say, by using the configuration described above, it is possible to obtain a light pattern of NFP on the A-A' cross section and to also obtain, on the image screen 6, a light pattern of FFP of the light having been transmitted through the diffractive optical element 4a. Therefore, by using a single diffractive optical element 4a, two light patterns can be produced. In this case, the two light patterns are formed on two different planes (the A-A' cross section and the image screen). For example, when a semitransparent film is provided at the A-A' cross section, the two light patterns can be formed. Also, by switching cases between a case where an additional image screen is put at the A-A' cross section and a case where the additional image screen is not put, it become possible to display light patterns different from each other on the two respective image screens.

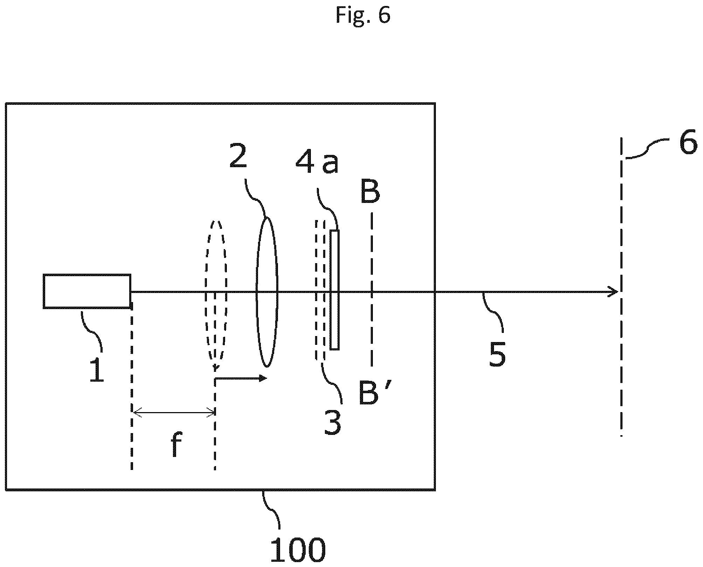

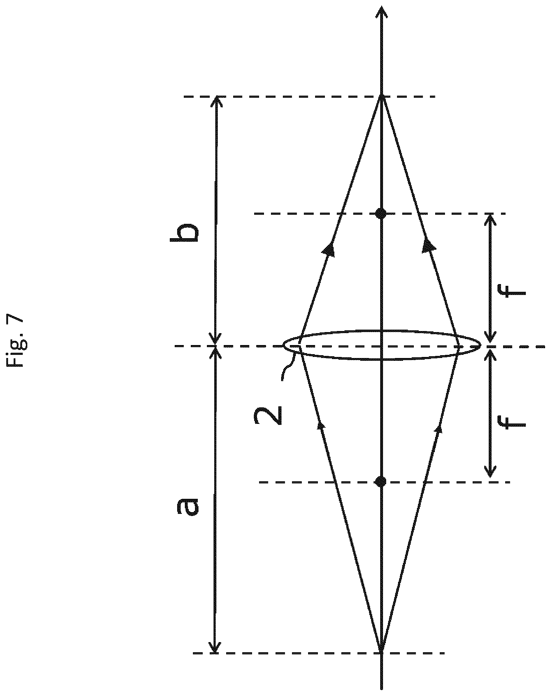

In the light pattern generator 100 shown in Fig. 1, two light patterns are produced on different image screens. Hereinafter, an embodiment will be described in which the light pattern is switched between different light patterns, to be produced, in contrast to the above embodiment, on the same image screen. Fig. 6 and 7 is the same embodiment as figures 1 to 5, but with explanation of the effect of shifting the position of the condenser lens between the positions shown in fig. 1 and fig. 6, which is further explained from [0038] on.

Fig. 6 shows a light pattern generator 100 in which the position of the condenser lens 2 is changed. The configuration of Fig. 6 is different from that of Fig. 1 in that the condenser lens 2 is disposed not at a first position at which the distance between the light source 1 and the condenser lens 2 is equal to the focal length of the condenser lens 2, but at a second position at which the distance between the light source 1 and the condenser lens 2 is longer than the focal length of the condenser lens 2. A cross section B-B' is a cross section crossing the optical axis 5, and is positioned at a condensation position of the light transmitted through the condenser lens 2.

The light outputted from the light source 1 enters the condenser lens 2. The incident light entering the condenser lens 2 is refracted thereat and is projected therefrom. In a case where the light source 1 is disposed at the focus position of the condenser lens 2, the light transmitted through the condenser lens 2 is collimated, whereas in a case where the distance between the light source 1 and the condenser lens 2 is longer than the focal length of the condenser lens 2, the light transmitted through the condenser lens 2 is converged.

With reference to Fig. 7, the condensation position of the light projected from the condenser lens 2 will be described. When the focal length is denoted by a symbol of **f**, the distance between the light source 1 and the condenser lens 2 is denoted by a symbol of **a**, and the distance between the condenser lens 2 and the condensation position is denoted by a symbol of **b**, the distance between the condenser lens 2 and the condensation position is expressed as b = a * f / (a - f) by the lens equation.

In the light pattern generator 100 in a state shown in Fig. 6, the light pattern on the cross section B-B' being the light pattern of the light converged by the condenser lens 2 is an FFP due to the Fourier transform effect of lens. Then the light pattern on the cross section B-B' is the light pattern shown in Fig. 4(b) due to diffraction at the diffractive optical element 4a.

Since the FFP turns into an NFP when the light propagates far away, the light propagating from the cross section B-B' makes, on the image screen 6, the light pattern which is shown in Fig. 4(a) and which is the NFP due to the mask.

In a case where the condenser lens 2 is positioned as shown in Fig. 1, the pattern shown in Fig. 4(b) which is "the FFP" due to the diffractive optical element 4a is displayed on the image screen 6; in a case where the condenser lens 2 is positioned as shown in Fig. 6, the pattern shown in Fig. 4(a) which is an NFP due to the mask 3 is displayed on the image screen 6. That is, by shifting the condenser lens 2 along the optical axis 5, it is possible to switch between two light patterns of the FFP due to the diffractive optical element 4a and the NFP due to the mask 3, and to display the switched light pattern on the image screen 6.

As described above, by being configured with a single movable condenser lens 2, a single mask 3, and a single diffractive optical element 4a, the light pattern generator has an advantage of being capable of switching between two light patterns of an NFP and an FFP to be displayed at the same position.

In Fig. 1, a configuration has been described which includes a single lens as a condenser lens 2. However, if an optical system including a plurality of lenses is configured so that light outputted from its light source is collimated, the configured system can switch between two light patterns and display the switched light pattern.

As described above, according to Embodiment 1, by shifting the condenser lens 2 disposed between the light source 1 and the diffractive optical element 4a, it is possible to switch between two light patterns of the NFP due to the mask 3 and the FFP due to the diffractive optical element 4a, and display the switched light pattern on the image screen 6. Therefore, even in a light pattern generator 100 using a single diffractive optical element, if a single movable condenser lens 2 and a single mask 3 are used, the light pattern generator has an advantage to switch between two light patterns and display the switched light pattern.

Further, by configuring the light pattern produced by the mask 3 and the light pattern produced by the diffractive optical element 4a so as to be related with each other, it is possible to display, when switching between the two light patterns and displaying the patterns, the displayed patterns like animated graphics. Here, the light patterns related with each other are light patterns that are different only in part and have the same pattern in the rest thereof.

Therefore, in the light pattern generator 100 according to Embodiment 1, by configuring the light pattern produced by the mask 3 and the light pattern formed by the diffractive optical element 4a so as to be related with each other, the light pattern generator using a single diffractive optical element 4a has an advantage to be capable of displaying animated graphics.

With respect to the method for driving the light source 1, both methods of a continuous wave (CW) drive and a pulse drive can have the same effect. For example, in a case where the pulse-drive method is applied for driving the light source 1, the pulse timings are synchronized with timings at which the light pattern generator's configuration is switched between the configuration shown in Fig. 1 and the configuration shown in Fig. 6, in other words, the light source 1 is turned ON when the condenser lens 2 is disposed at a position indicated in Fig. 1 or Fig. 6, and the light source is turned OFF when the condenser lens 2 is moving. This light source ON/OFF technique is applied to the CW drive method, whereby light patterns are not displayed during the condenser lens's moving which are other than the light pattern due to the mask 3 and the light pattern due to the diffractive optical element 4a which are to be possibly displayed on the image screen 6.

In Embodiment 1, the light source 1 is pulse-driven, and the movement of the condenser lens 2 is synchronized with ON/OFF switching operations for the pulses, whereby light patterns other than light patterns due to the mask 3 and the diffractive optical element 4a are prevented from being displayed on the image screen 6.

As described above, the light pattern generator 100 according to Embodiment 1 includes: a laser light source 1 to output laser light; a condenser lens 2 to refract the laser light outputted from the laser light source 1; a mask 3 to absorb or reflect part of the refracted light outputted from the condenser lens 2, the mask transmitting the rest of the refracted light; and a diffractive optical element 4a to change a phase of the transmitted light in accordance with a position on a plane perpendicular to a direction in which the light transmitted through the mask 3 travels and to output light having a phase distribution to form a light pattern, wherein the condenser lens 2 shifts its position between a first position which is the condenser lens 2's focal length distant from the laser light source 1 and a second position that is farther than the condenser lens 2's focal length from the laser light source 1; and wherein when the condenser lens 2 is positioned at the first position, the light output by the laser light source 1 and transmitted through the condenser lens 2, the mask 3 and the diffractive optical element 4a is collimated and when the condenser lens 2 is positioned at the second position, the light output by the laser light source 1 and transmitted through the condenser lens 2, the mask 3 and the diffractive optical element 4a is converging. This configuration makes it possible to produce, using one diffractive optical element 4a, two patterns of a pattern due to the mask and a far-field pattern due to the diffractive optical element. That is, it is possible to switch between the NFP and the FFP and to display the switched pattern on the same image screen.

Also, even when the arrangement orders of the mask 3 and the diffractive optical element 4a are exchanged, no difference appears in the light having been transmitted through the mask 3 and the diffractive optical element 4a, to thereby have the same effect. That is, the light pattern generator 100 according to Embodiment 1 includes: a laser light source 1 to output laser light; a condenser lens 2 to refract the laser light outputted from the laser light source 1; a diffractive optical element to change a phase of the refracted light in accordance with a position on a plane perpendicular to a direction in which the refracted light outputted from the condenser lens 2 travels and to output light having a phase distribution; and a mask to absorb or reflect part of the light which is outputted from the diffractive optical element and has the phase distribution, the mask transmitting the rest of the light having the phase distribution; wherein the condenser lens 2 shifts its position between a first position which is the condenser lens's focal length distant from the laser light source and a second position that is farther than the condenser lens's focal length from the laser light source and wherein the light having been transmitted through the mask forms a light pattern; and wherein when the condenser lens is positioned at the first position, the light output by the laser light source and transmitted through the condenser lens, the mask and the diffractive optical element is collimated and when the condenser lens is positioned at the second position, the light output by the laser light source and transmitted through the condenser lens, the mask and the diffractive optical element is converging. This configuration also makes it possible to produce, using one diffractive optical element, two patterns of a pattern due to the mask and a far-field pattern due to the diffractive optical element. That is, it is possible to switch between the NFP and the FFP and to display the switched pattern on the same image screen.

Also, in the light pattern generator 100 according to Embodiment 1, the condenser lens 2 is characterized in that it converts laser light outputted from the laser light source 1 into parallel rays of light. This configuration makes it possible to precisely produce two patterns of a pattern due to the mask and a far-field pattern due to the diffractive optical element.

In the light pattern generator 100 according to Embodiment 1, the light pattern generator is characterized in that, when the condenser lens 2 exists at a position father than a positon being the condenser lens 2's focal length distant from the laser light source 1, the condenser lens 2 converges the laser light outputted from the laser light source 1. This configuration makes it possible to produce an FFP at a condensation position and to produce, on the image screen, an NFP due to the intensity distribution of the mask 3.

Also, in the light pattern generator 100 according to Embodiment 1, the mask 3 is characterized in that, by absorbing or reflecting light in part, the mask 3 forms a light pattern related to a light pattern that is formed by light having a phase distribution in accordance with its phase distribution. By this configuration, the light pattern produced by the mask and the light pattern produced by the diffractive optical element are made to have a relation with each other; this brings a light pattern generator using a single diffractive optical element 100, an advantage that the light pattern generator can display animated graphics.

Also, in the light pattern generator 100 according to Embodiment 1, the laser light source 1 is characterized in that it outputs laser light driven by pulses and the condenser lens 2 is characterized in that it is shifted between the first position and the second position in synchronism with the pulse timings of the pulses. By this configuration, it is possible to smoothly switch between the light pattern due to the mask 3 and the light pattern due to the diffractive optical element 4a, which are to be displayed on the image screen 6.

Also, in the light pattern generator 100 according to Embodiment 1, the diffractive optical element 4a is characterized in that it has an uneven surface for changing the phase distribution of the incident light, and the shape of the unevenness is a periodic array along in a specific direction. When combined with the mask 3, this configuration makes it possible to precisely display, as a diffraction pattern, an FFP on the image screen, even if a part of the light is not transmitted through the diffractive optical element.

### Embodiment 2

In Embodiment 1, a method has been described in which a single mask 1 is disposed in front of or behind a single diffractive optical element, and the position of a single condenser lens disposed in front of the diffractive optical element is changed to switch between two light patterns of a light pattern due to the mask and a light pattern due to the diffractive optical element, each of which is to be produced at the image screen. In Embodiment 2, a light pattern generator 200 will be described which includes a single light source, a single condenser lens, and a single diffractive optical element on which a light-shielding part is partially provided.

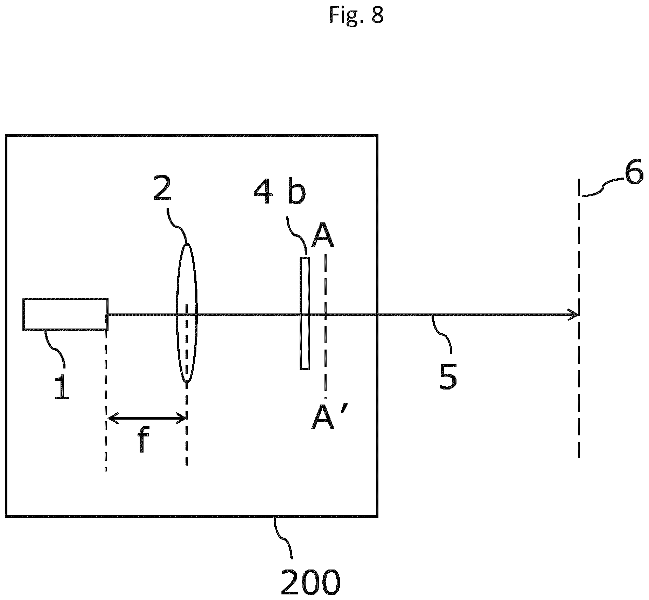

Fig. 8 shows a configuration example of the light pattern generator 200 according to Embodiment 2. In Fig. 8, the same symbols as used in Fig. 1 denote the same or equivalent parts, whose description will be omitted. When compared with Embodiment 1, Fig. 8 is different in that there is no the mask 3 in front of or behind a diffractive optical element 4b and a light-shielding part is provided partially on the diffractive optical element 4b. Hereinafter, the diffractive optical element 4b is called a light-shielding-part-provided diffractive optical element.

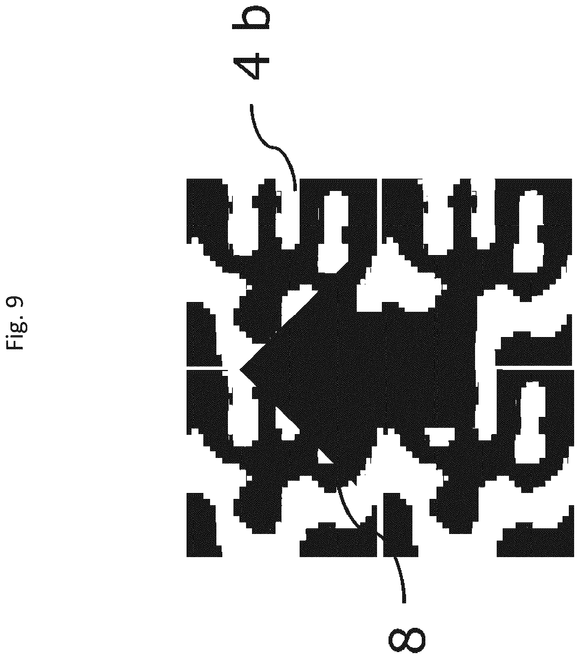

Fig. 9 shows a structure example of the light-shielding-part-provided diffractive optical element 4b according to Embodiment 2. A part of the surface of the light-shielding-part-provided diffractive optical element 4b is provided with a light-shielding part 8 which does not transmit the incident light. The light-shielding part 8 reflects or absorbs the light entering the light-shielding part 8 of the diffractive optical element 4b. The light-shielding part 8 can be manufactured by providing absorbent or reflective coating on the surface of the diffractive optical element 4b. Fig. 9 shows an example of the light-shielding-part-provided diffractive optical element 4b whose light-shielding part 8 is shaped in an arrow.

Next, the operation of the light pattern generator 200 according to Embodiment 2 will be described.

Fig. 8 is different from the configuration shown in Fig. 1 in that a mask 3 is not provided in front of or behind the light-shielding-part-provided diffractive optical element 4b. The light outputted from the light source 1 is transmitted through the condenser lens 2 and enters the light-shielding-part-provided diffractive optical element 4b. Out of the incident light entering the light-shielding-part-provided diffractive optical element 4b, the incident light entering the light-shielding part 8 is reflected or absorbed. Out of the incident light entering the light-shielding-part-provided diffractive optical element 4b, the incident light entering the parts other than the light-shielding part 8 is transmitted through the light-shielding-part-provided diffractive optical element 4b, to be phase-modulated. The light that has been transmitted through the light-shielding-part-provided diffractive optical element 4b propagates and produces a light pattern on the image screen 6 due to phase distribution of the diffractive optical element 4b.

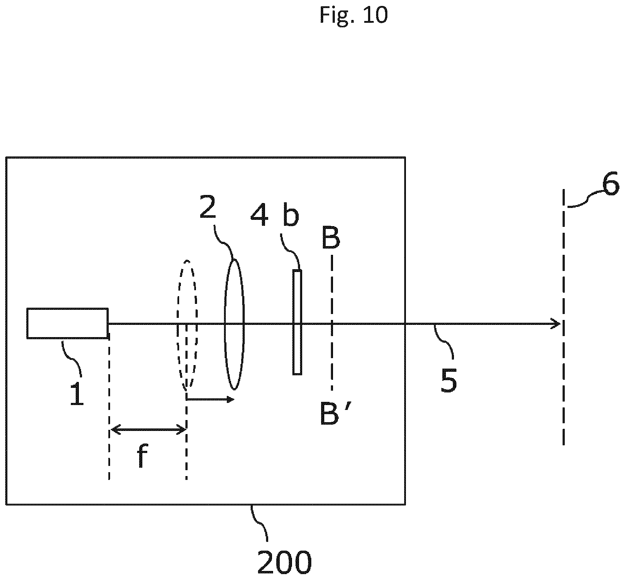

Next, with reference to Fig. 10, an advantage of Embodiment 2 will be described which is capable of switching light patterns to be produced on the image screen 6.

The configuration shown in Fig. 10 is different from the configuration shown in Fig. 8 in that the condenser lens 2 is placed not at a position at which the distance between the light source 1 and the condenser lens 2 is equal to the focal length of the condenser lens 2, but at a position at which the distance between the light source 1 and the condenser lens 2 is longer than the focal length of the condenser lens 2.

The light outputted from the light source 1 is transmitted through the condenser lens 2 to enter the light-shielding-part-provided diffractive optical element 4b. The light having been transmitted through the light-shielding-part-provided diffractive optical element 4b is converged on a cross section B-B'. At the cross section B-B', the converged light becomes an FFP, which is produced due to phase distribution of the light-shielding-part-provided diffractive optical element 4b. And then, after propagation, an NFP is produced on the image screen 6 by the shape of the light-shielding part on the surface of the light-shielding-part-provided diffractive optical element 4b.

As described above, in Embodiment 2, the light pattern generator includes a single condenser lens 2 and a single diffractive optical element 4b on the surface of which a light-shielding part 8 is partially provided, and the position of the condenser lens 2 is shifted, whereby it is possible to switch between two light patterns of a light pattern due to phase distribution of the light-shielding-part-provided diffractive optical element 4b and a light pattern due to the light-shielding part 8 of the light-shielding-part-provided diffractive optical element 4b and to produce the switched pattern on the image screen 6.

Therefore, according to Embodiment 2, by providing a single light-shielding-part-provided diffractive optical element 4b on the surface of which a light-shielding part 8 is partially provided, it is possible to, without using a mask, switch between two light patterns and display the switched light pattern with a single light source, a single condenser lens, and the single diffractive optical element.

As described above, the light pattern generator 200 according to Embodiment 2 includes: a laser light source 1 to output laser light; a condenser lens 2 to refract the laser light outputted from the laser light source 1; and a diffractive optical element 4b with light-shielding part, the light-shielding-part-provided diffractive optical element 4b absorbing or reflecting part of the refracted light outputted from the condenser lens 2, the light-shielding-part-provided diffractive optical element 4b changing a phase of the rest of the refracted light in accordance with a position on a plane perpendicular to a direction in which the rest of the refracted light travels to output light with a phase distribution to form a light pattern, wherein the condenser lens 2 shifts its position between a first position which is the condenser lens's focal length distant from the laser light source 1 and a second position that is farther than the condenser lens's focal length from the laser light source 1; and wherein when the condenser lens 2 is positioned at the first position, the light output by the laser light source 1 and transmitted through the condenser lens 2 and the light-shielding-part-provided diffractive optical element 4b is collimated and when the condenser lens 2 is positioned at the second position, the light output by the laser light source 1 and transmitted through the condenser lens 2 and the light-shielding-part-provided diffractive optical element 4b is converging.

This configuration also makes it possible to produce two light patterns with a single diffractive optical element.

Also, with respect to other components, they can bring the same advantages as brought in Embodiment 1. For example, in the light pattern generator 200 according to Embodiment 2, the diffractive optical element 4b with a mask thereon is characterized in that it has an uneven surface for changing the phase distribution of the incident light, and the shape of the unevenness is periodic along in a certain direction. This configuration makes it possible to precisely display a light pattern on the image screen.

### Description of Symbols

1: laser light source 2: condenser lens 3: mask 4a: diffractive optical element 4b: diffractive optical element with light-shielding part 5: optical axis6: image screen 7: transparent portion 8: light-shielding part 100, 200: light pattern generator 7: transparent portion 8: light-shielding part 100, 200: light pattern generator

## Claims

1. A light pattern generator (100) comprising:
a laser light source (1) to output laser light;
a condenser lens (2) to refract the laser light outputted from the laser light source (1);
a mask (3) to absorb or reflect part of the refracted light outputted from the condenser lens (2), the mask (3) transmitting the rest of the refracted light; and
a diffractive optical element (4a) to change a phase of the transmitted light in accordance with a position on a plane perpendicular to a direction in which the light transmitted through the mask (3) travels and to output light having a phase distribution to form a light pattern,
wherein the condenser lens (2) shifts its position between a first position which is the condenser lens's focal length distant from the laser light source (1) and a second position that is farther than the condenser lens's focal length from the laser light source (1); and
wherein when the condenser lens (2) is positioned at the first position, the light output by the laser light source (1) and transmitted through the condenser lens (2), the mask (3) and the diffractive optical element (4a) is collimated and when the condenser lens (2) is positioned at the second position, the light output by the laser light source (1) and transmitted through the condenser lens (2), the mask (3) and the diffractive optical element (4a) is converging.

2. A light pattern generator (100) comprising:
a laser light source (1) to output laser light;
a condenser lens (2) to refract the laser light outputted from the laser light source (1);
a diffractive optical element (4a) to change a phase of the refracted light (2) in accordance with a position on a plane perpendicular to a direction in which the refracted light outputted from the condenser lens (2) travels and to output light having a phase distribution; and
a mask (3) to absorb or reflect part of the light which is outputted from the diffractive optical element (4a) and has the phase distribution, the mask (3) transmitting the rest of the light having the phase distribution;
wherein the condenser lens (2) shifts it position between a first position which is the condenser lens's focal length distant from the laser light source (1) and a second position that is farther than the condenser lens's focal length from the laser light source (1) and
wherein the light having been transmitted through the mask (3) forms a light pattern; and
wherein when the condenser lens (2) is positioned at the first position, the light output by the laser light source (1) and transmitted through the condenser lens (2), the mask (3) and the diffractive optical element (4a) is collimated and when the condenser lens (2) is positioned at the second position, the light output by the laser light source (1) and transmitted through the condenser lens (2), the mask (3) and the diffractive optical element (4a) is converging.

3. A light pattern generator (200), comprising:
a laser light source (1) to output laser light;
a condenser lens (2) to refract the laser light outputted from the laser light source (1); and
a diffractive optical element with light-shielding part (4b), the light-shielding-part-provided diffractive optical element absorbing or reflecting part of the refracted light outputted from the condenser lens (2), the light-shielding-part-provided diffractive optical element changing a phase of the rest of the refracted light in accordance with a position on a plane perpendicular to a direction in which the rest of the refracted light travels to output light with a phase distribution to form a light pattern,
wherein the condenser lens (2) shifts it position between a first position which is the condenser lens's focal length distant from the laser light source (1) and a second position that is farther than the condenser lens's focal length from the laser light source (1); and
wherein when the condenser lens (2) is positioned at the first position, the light output by the laser light source (1) and transmitted through the condenser lens (2) and the light-shielding-part-provided diffractive optical element (4b) is collimated and when the condenser lens (2) is positioned at the second position, the light output by the laser light source (1) and transmitted through the condenser lens (2) and the light-shielding-part-provided diffractive optical element (4b) is converging.

4. The light pattern generator (100, 200) according to any one of claims 1 through 3, wherein the condenser lens (2) converts rays of the laser light outputted from the laser light source (1) into parallel rays of light.

5. The light pattern generator (100, 200) according to any one of claims 1 through 4, wherein when the condenser lens (2) is positioned at the second position, the condenser lens (2) converges laser light outputted from the laser light source (1).

6. The light pattern generator (100, 200) according to any one of claims 1 through 5, wherein the mask (3) or the light-shielding-part-provided diffractive optical element absorbs or reflects part of light incident thereon to form a light pattern related to a light pattern formed by phase distribution of the light having the phase distribution.

7. The light pattern generator according (100, 200) to any one of claims 1 through 6, wherein the laser light source (1) outputs laser light driven by pulses, and
wherein the condenser lens (2) shifts, in synchronisation with pulse timings of the pulses, its position between the first position and the second position.

8. The light pattern generator (100, 200) according to anyone of claims 1 through 7, wherein a surface of the diffractive optical element (4a) or the light-shielding-part-provided diffractive optical element (4b) has an uneven shape to change a phase distribution of incident light, the uneven shape being periodic along a specific direction.

## Patentansprüche

1. Lichtmustererzeuger (100), umfassend:
eine Laserlichtquelle (1) zum Ausgeben von Laserlicht;
eine Kondensorlinse (2) zum Brechen des von der Laserlichtquelle (1) ausgegebenen Laserlichts;
eine Maske (3) zum Absorbieren oder Reflektieren eines Teils des von der Kondensorlinse (2) ausgegebenen gebrochenen Lichts, wobei die Maske (3) den Rest des gebrochenen Lichts überträgt; und
ein beugendes optisches Element (4a), zum Ändern einer Phase des übertragenen Lichts in Übereinstimmung mit einer Position auf einer Ebene senkrecht zu einer Richtung, in der sich das durch die Maske (3) übertragene Licht ausbreitet, und zum Ausgeben von Licht, das eine Phasenverteilung aufweist, um ein Lichtmuster zu bilden,
wobei die Kondensorlinse (2) ihre Position zwischen einer ersten Position, die um die Brennweite der Kondensorlinse von der Laserlichtquelle (1) entfernt ist, und einer zweiten Position, die weiter als die Brennweite der Kondensorlinse von der Laserlichtquelle (1) entfernt ist, verschiebt; und
wobei, wenn die Kondensorlinse (2) an der ersten Position positioniert ist, das von der Laserlichtquelle (1) ausgegebene und durch die Kondensorlinse (2), die Maske (3) und das beugende optische Element (4a) übertragene Licht kollimiert wird und, wenn die Kondensorlinse (2) an der zweiten Position positioniert ist, das von der Laserlichtquelle (1) ausgegebene und durch die Kondensorlinse (2), die Maske (3) und das beugende optische Element (4a) übertragene Licht konvergiert.

2. Lichtmustererzeuger (100), umfassend:
eine Laserlichtquelle (1) zum Ausgeben von Laserlicht;
eine Kondensorlinse (2) zum Brechen des von der Laserlichtquelle (1) ausgegebenen Laserlichts;
ein beugendes optisches Element (4a) zum Ändern einer Phase des gebrochenen Lichts (2) in Übereinstimmung mit einer Position auf einer Ebene senkrecht zu einer Richtung, in der sich das von der Kondensorlinse (2) gebrochene Licht ausbreitet, und zum Ausgeben von Licht, das eine Phasenverteilung aufweist; und
eine Maske (3) zum Absorbieren oder Reflektieren eines Teils des Lichts, das von dem beugenden optischen Element (4a) ausgegeben wird und die Phasenverteilung aufweist, wobei die Maske (3) den Rest des Lichts, das die Phasenverteilung aufweist, überträgt;
wobei die Kondensorlinse (2) ihre Position zwischen einer ersten Position, die um die Brennweite der Kondensorlinse von der Laserlichtquelle (1) entfernt ist, und einer zweiten Position, die weiter als die Brennweite der Kondensorlinse von der Laserlichtquelle (1) entfernt ist, verschiebt und wobei das Licht, das durch die Maske (3) übertragen wurde, ein Lichtmuster bildet; und
wobei, wenn die Kondensorlinse (2) an der ersten Position positioniert ist, das von der Laserlichtquelle (1) ausgegebene und durch die Kondensorlinse (2), die Maske (3) und das beugende optische Element (4a) übertragene Licht kollimiert wird und, wenn die Kondensorlinse (2) an der zweiten Position positioniert ist, das von der Laserlichtquelle (1) ausgegebene und durch die Kondensorlinse (2), die Maske (3) und das beugende optische Element (4a) übertragene Licht konvergiert.

3. Lichtmustererzeuger (200), umfassend:
eine Laserlichtquelle (1) zum Ausgeben von Laserlicht;
eine Kondensorlinse (2) zum Brechen des von der Laserlichtquelle (1) ausgegebenen Laserlichts; und
ein beugendes optisches Element mit einem lichtabschirmenden Teil (4b), wobei das mit dem lichtabschirmenden Teil versehene beugende optische Element einen Teil des gebrochenen Lichts, das von der Kondensorlinse (2) ausgegeben wird, absorbiert oder reflektiert, wobei das mit dem lichtabschirmenden Teil versehene beugende optische Element eine Phase des Rests des gebrochenen Lichts in Übereinstimmung mit einer Position auf einer Ebene senkrecht zu einer Richtung, in der sich der Rest des gebrochenen Lichts bewegt, ändert, um Licht mit einer Phasenverteilung auszugeben, um ein Lichtmuster zu bilden,
wobei die Kondensorlinse (2) ihre Position zwischen einer ersten Position, die um die Brennweite der Kondensorlinse von der Laserlichtquelle (1) entfernt ist, und einer zweiten Position, die weiter als die Brennweite der Kondensorlinse von der Laserlichtquelle (1) entfernt ist, verschiebt; und
wobei, wenn die Kondensorlinse (2) an der ersten Position positioniert ist, das von der Laserlichtquelle (1) ausgegebene und durch die Kondensorlinse (2) und das mit dem lichtabschirmenden Teil versehene beugende optische Element (4b) übertragene Licht kollimiert wird und, wenn die Kondensorlinse (2) an der zweiten Position positioniert ist, das von der Laserlichtquelle (1) ausgegebene und durch die Kondensorlinse (2) und das mit dem lichtabschirmenden Teil versehene beugende optische Element (4b) übertragene Licht konvergiert.

4. Lichtmustererzeuger (100, 200) nach einem der Ansprüche 1 bis 3, wobei die Kondensorlinse (2) Strahlen des von der Laserlichtquelle (1) ausgegebenen Laserlichts in parallele Lichtstrahlen umwandelt.

5. Lichtmustererzeuger (100, 200) nach einem der Ansprüche 1 bis 4, wobei die Kondensorlinse (2) von der Laserlichtquelle (1) ausgegebenes Laserlicht konvergiert, wenn die Kondensorlinse (2) an der zweiten Position positioniert ist.

6. Lichtmustererzeuger (100, 200) nach einem der Ansprüche 1 bis 5, wobei die Maske (3) oder das mit einem lichtabschirmenden Teil vorgesehene optische Element einen Teil des darauf einfallenden Lichts absorbiert oder reflektiert, um ein Lichtmuster zu bilden, das mit einem Lichtmuster in Beziehung steht, das durch Phasenverteilung des Lichts, das die Phasenverteilung aufweist, gebildet ist.

7. Lichtmustererzeuger (100, 200) nach einem der Ansprüche 1 bis 6, wobei die Laserlichtquelle (1) pulsgesteuertes Laserlicht ausgibt und wobei die Kondensorlinse (2) ihre Position zwischen der ersten Position und der zweiten Position synchron mit den Pulszeiten der Pulse verschiebt.

8. Lichtmustererzeuger (100, 200) nach einem der Ansprüche 1 bis 7, wobei eine Oberfläche des beugenden optischen Elements (4a) oder des mit einem lichtabschirmenden Teil vorgesehenen beugenden optischen Elements (4b) eine unebene Form aufweist, um eine Phasenverteilung einfallenden Lichts zu ändern, wobei die unebene Form entlang einer bestimmten Richtung periodisch ist.

## Revendications

1. Générateur de motif lumineux (100) comprenant :
une source de lumière laser (1) destinée à délivrer en sortie une lumière laser;
une lentille de condensation (2) destinée à réfracter la lumière laser délivrée en sortie par la source de lumière laser (1) ;
un masque (3) destiné à absorber ou à réfléchir une partie de la lumière réfractée délivrée en sortie par la lentille de condensation (2), le masque (3) transmettant le reste de la lumière réfractée ; et
un élément optique diffractif (4a) destiné à modifier la phase de la lumière transmise, selon une position dans un plan perpendiculaire à la direction dans laquelle se déplace la lumière transmise par le masque (3), et à délivrer en sortie une lumière qui présente une distribution de phase, afin de former un motif lumineux,
dans lequel la lentille de condensation (2) décale sa position entre une première position qui est la longueur focale de la lentille de condensation à partir de la source de lumière laser (1), et une seconde position qui est plus éloignée que la longueur focale de la lentille de condensation à partir de la source de lumière laser (1) ; et
dans lequel, lorsque la lentille de condensation (2) est positionnée au niveau de la première position, la lumière délivrée en sortie par la source de lumière laser (1), et transmise à travers la lentille de condensation (2), le masque (3) et l'élément optique diffractif (4a), est collimatée, et lorsque la lentille de condensation (2) est positionnée au niveau de la seconde position, la lumière délivrée en sortie par la source de lumière laser (1), et transmise à travers la lentille de condensation (2), le masque (3) et l'élément optique diffractif (4a), converge.

2. Générateur de motif lumineux (100) comprenant :
une source de lumière laser (1) destinée à délivrer en sortie une lumière laser;
une lentille de condensation (2) destinée à réfracter la lumière laser délivrée en sortie par la source de lumière laser (1) ;
un élément optique diffractif (4a) destiné à modifier la phase de la lumière réfractée (2), selon une position dans un plan perpendiculaire à la direction dans laquelle se déplace la lumière réfractée délivrée en sortie par la lentille de condensation (2), et à délivrer en sortie une lumière qui présente une distribution de phase ; et
un masque (3) destiné à absorber ou à réfléchir une partie de la lumière qui est délivrée en sortie par l'élément optique diffractif (4a), et qui présente la distribution de phase, le masque (3) transmettant le reste de la lumière qui présente la distribution de phase ;
dans lequel la lentille de condensation (2) décale sa position entre une première position qui est la longueur focale de la lentille de condensation à partir de la source de lumière laser (1), et une seconde position qui est plus éloignée que la longueur focale de la lentille de condensation à partir de la source de lumière laser (1), et dans lequel la lumière qui a été transmise à travers le masque (3), forme un motif lumineux ; et
dans lequel, lorsque la lentille de condensation (2) est positionnée au niveau de la première position, la lumière délivrée en sortie par la source de lumière laser (1), et transmise à travers la lentille de condensation (2), le masque (3) et l'élément optique diffractif (4a), est collimatée, et lorsque la lentille de condensation (2) est positionnée au niveau de la seconde position, la lumière délivrée en sortie par la source de lumière laser (1), et transmise à travers la lentille de condensation (2), le masque (3) et l'élément optique diffractif (4a), converge.

3. Générateur de motif lumineux (200) comprenant :
une source de lumière laser (1) destinée à délivrer en sortie une lumière laser;
une lentille de condensation (2) destinée à réfracter la lumière laser délivrée en sortie par la source de lumière laser (1) ; et
un élément optique diffractif doté d'une partie protection vis-à-vis de la lumière (4b), l'élément optique diffractif doté d'une partie protection vis-à-vis de la lumière absorbant ou réfléchissant une partie de la lumière réfractée délivrée en sortie par la lentille de condensation (2), l'élément optique diffractif doté d'une partie protection vis-à-vis de la lumière modifiant la phase du reste de la lumière réfractée, selon une position dans un plan perpendiculaire à la direction dans laquelle se déplace le reste de la lumière réfractée, afin de délivrer en sortie une lumière qui présente une distribution de phase, de manière à former un motif lumineux,
dans lequel la lentille de condensation (2) décale sa position entre une première position qui est la longueur focale de la lentille de condensation à partir de la source de lumière laser (1), et une seconde position qui est plus éloignée que la longueur focale de la lentille de condensation à partir de la source de lumière laser (1) ; et
dans lequel, lorsque la lentille de condensation (2) est positionnée au niveau de la première position, la lumière délivrée en sortie par la source de lumière laser (1), et transmise à travers la lentille de condensation (2) et l'élément optique diffractif doté d'une partie protection vis-à-vis de la lumière (4b), est collimatée, et lorsque la lentille de condensation (2) est positionnée au niveau de la seconde position, la lumière délivrée en sortie par la source de lumière laser (1), et transmise à travers la lentille de condensation (2) et l'élément optique diffractif doté d'une partie protection vis-à-vis de la lumière (4b), converge.

4. Générateur de motif lumineux (100, 200) selon l'une quelconque des revendications 1 à 3, dans lequel la lentille de condensation (2) convertit les rayons de la lumière laser délivrée en sortie par la source de lumière laser (1), en rayons de lumière parallèles.

5. Générateur de motif lumineux (100, 200) selon l'une quelconque des revendications 1 à 4, dans lequel, lorsque la lentille de condensation (2) est positionnée au niveau de la seconde position, la lentille de condensation (2) fait converger la lumière laser délivrée en sortie par la source de lumière laser (1).

6. Générateur de motif lumineux (100, 200) selon l'une quelconque des revendications 1 à 5, dans lequel le masque (3) ou l'élément optique diffractif doté d'une partie protection vis-à-vis de la lumière, absorbe ou réfléchit une partie de la lumière incidente celui-ci, afin de former un motif lumineux associé à un motif lumineux formé par une distribution de phase de la lumière qui présente la distribution de phase.

7. Générateur de motif lumineux (100, 200) selon l'une quelconque des revendications 1 à 6, dans lequel la source de lumière laser (1) délivre en sortie une lumière laser commandée par des impulsions, et dans lequel la lentille de condensation (2) décale sa position, en synchronisation avec les synchronisations d'impulsion des impulsions, entre la première position et la seconde position.

8. Générateur de motif lumineux (100, 200) selon l'une quelconque des revendications 1 à 7, dans lequel la surface de l'élément optique diffractif (4a) ou de l'élément optique diffractif doté d'une partie protection vis-à-vis de la lumière (4b), présente une forme irrégulière afin de modifier la distribution de phase de la lumière incidente, la forme irrégulière étant périodique le long d'une direction spécifique.
